# Europäisches Patentamt

# European Patent Office

# Office européen des brevets

(11) Publication number: · **0 109 586**
**B1**

---

(12) **EUROPEAN PATENT SPECIFICATION**

(45) Date of publication of patent specification: **11.01.89**

(51) Int. Cl.⁴: **B 05 D 5/06,** B 29 D 11/00

(21) Application number: **83110766.9**

(22) Date of filing: **27.10.83**

---

(54) **Process for manufacturing light-guiding articles.**

---

(30) Priority: **27.10.82 IT 2394782**

(43) Date of publication of application:
**30.05.84 Bulletin 84/22**

(45) Publication of the grant of the patent:
**11.01.89 Bulletin 89/02**

(84) Designated Contracting States:
**AT BE CH DE FR GB LI NL SE**

(56) References cited:
**DE-A-2 429 490**
**FR-A-2 252 586**
**FR-A-2 405 806**
**GB-A-1 439 627**
**US-A-3 816 160**

(73) Proprietor: **Montedison S.p.A.**
**31, Foro Buonaparte**
**I-20121 Milan (IT)**

(72) Inventor: **Guerra, Gaetano**
**20, Via Nastri**
**I-80055 Portici Napoli (IT)**
Inventor: **Mandara, Umberto**
**16, Via Poggio dei Mari**
**I-80129 Napoli (IT)**
Inventor: **Moschetti, Antonio**
**37, Via Pio XII**
**I-80144 Casoria Napoli (IT)**

(74) Representative: **Barz, Peter, Dr. et al**
**Patentanwälte Dr. V. Schmied-Kowarzik Dipl.-**
**Ing. G. Dannenberg Dr. P. Weinhold Dr. D. Gudel**
**Dipl.-Ing. S. Schubert Dr. P. Barz**
**Siegfriedstrasse 8**
**D-8000 München 40 (DE)**

---

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to light-guiding articles and a process for manufacturing light-guiding articles. More particularly, the present invention relates to a process for manufacturing light-guiding articles consisting of vitreous polymers with a gradually varying refractive index.

The term "vitreous polymers", whenever used in the present specification and in the appended claims, refers to amorphous polymers, with a glass transition temperature higher than room temperature, such as e.g. the polymers and copolymers belonging to the series of polymethacrylates and polyacrylates, polystyrene, vinyl polyacetate and polycarbonate.

The term "light-guiding articles", whenever used in the present specification and in the appended claims, refers to optical components such as e.g. lenses, radiation concentrators and optical fibres.

Various processes for manufacturing light-guiding articles are known, such as e.g. that of diffusing a suitable monomer in a polymer or in a prepolymer, successively prepolymerising the monomer and, optionally, completing the prepolymer polymerisation by means of a proper reaction, generally a photochemical reaction.

This process, which in a few cases leads to satisfactory results, is rather complicated and expensive.

GB-A-1 439 627 discloses this kind of method for manufacturing a synthetic light conducting element whose refractive index changes progressively from the surface of the element inwards. Said process comprises prepolymerization to a certain extent of a first ethylenically unsaturated monomer which can form a crosslinked transparent polymer, shaping of the prepolymer, contacting the surface of the shaped article with a second monomer which forms a transparent polymer having a refractive index different from the polymer of the first monomer so as to cause the second monomer to diffuse into the article through its surface and to set up a decreasing concentration gradient of the second monomer in the prepolymer, and completing the polymerization.

Another known process for preparing light-guiding articles comprises coaxially co-extruding two polymers having different refractive indices.

With this process however, only optical components with a sharp and discontinuous variation in the refractive index are obtained.

An object of the present invention is to provide a new process for manufacturing light-guiding articles which does not exhibit the above-mentioned drawbacks.

In particular, an object of the present invention is to provide a new process for manufacturing light-guiding articles which is easy and economical to carry out and permits optical products with a continuous, gradual, controllable and stable variation of the refractive index to be obtained.

According to the present invention these and other objects are achieved by a process which comprises immersing the article prepared from a vitreous polymer in a bath containing a substance having a refractive index different from that of the polymer of the article by at least $5.10^{-2}$ units, dissolved in a solvent thereof having a low boiling point and being capable of swelling the polymer, and subjecting the article so obtained to a heat-treatment at a temperature ranging from 20 to 150°C in order to remove the solvent, wherein the substance having a different refractive index has a boiling temperature higher than 80°C, compatibility with the polymer of the article and stability to light radiation and is selected from fluorinated alcohols, fluorinated acids, fluorinated amines, fluorinated acrylates, esters, anhydrides, inorganic acids and hydroxides, inorganic halides, inorganic nitrates, halogenated alkanes, aromatic hydrocarbons and alkoxysilanes, and wherein the bath temperature ranges from room temperature to 100°C and the immersion time varies from 1 to 200 minutes.

Specific examples of substances having a different refractive index are beryllium fluoride, boron and caesium tetrafluoride, 1,3-difluoro-2-propanol, perfluoro octanol, difluoroacetic acid, heptaf-luorobutyric acid, heptacosfluorotributylamine, pentafluoropropylacrylate, dimethyl sulfate, acetic anhydride, lithium iodide, potassium iodide, zinc chloride, lead nitrate, bromoform, diiodomethane, styrene, benzaldehyde, orthophosphoric acid, boric acid, sodium hydroxide, tetramethoxysilane and tetraethoxy silane.

The concentration of the substance having a different refractive index varies as a function of the type of the substance and of the vitreous polymer constituting the article. Generally, it is preferable to employ very concentrated solutions provided that the resulting article retains its transparency. Solutions containing up to 100% by weight of the substance having a different refractive index may be used.

As solvents for the substance having a different refractive index it is possible to use e.g. alcohols, esters, ketones, glycols, gasoline. In practice, the preferred solvents are those having a low molecular weight, such as methanol, ethanol, n-butanol, hexane, benzene, acetone, ethylene and glycol, depending on the polymer used. Mixtures of these solvents with water can also be employed, especially when the article contains residual strains from the molding process.

The immersion time of the article in the solution varies from 1 minute to 200 minutes, depending on the bath temperature and on the type of solvent utilized as well as on the type of article.

To promote the addition process and to obtain a more homogeneous refractive index profile on the entire surface of the article, it is advisable to stir the bath or to use a forced circulation bath. The bath temperature and concentration are generally kept constant during the whole addition process.

Furthermore, it is preferable to subject the article, prior to the addition process, to a preliminary washing and degreasing treatment.

The article thus obtained is removed from the bath and repeatedly washed with water or a solvent or a mixture thereof, and subjected to a heat-treatment of between 20°C and 150°C to remove the solvent.

During this heat-treatment, the solvent migrates to the surface of the article and evaporates, leaving the additive in the surface layer of the polymer in a depth of between 20 and 300 μm.

According to the process of the present invention, the depth and the concentration of the additive and therefore the refractive index profile may be controlled by suitably selecting the concentration of the additive in the bath, the bath temperature and the immersion time.

Furthermore, the process according to the present invention makes it possible to use non-thermostable additives, since the process temperature does not exceed 150°C.

The light-guiding articles obtained by the process of the present invention, show high hardness similar to that of the non-treated starting vitreous polymer. Because of their high surface hardness, the light-guiding articles obtained by the process of the present invention may be used directly, without protection jackets.

In the case of optical fibres which, as is known, may require lateral screening in order to protect them from light radiation, this screening or shielding may be obtained either by coating or immersing the fibres into a bath containing a black dyestuff dissolved in a solvent thereof having a low boiling point and being capable of swelling the polymer, and subsequently removing the solvent by a heat-treatment.

The thickness of the screening is between 0.001 and 20 μm.

Accordingly, the present invention also provides light-guiding articles consisting of vitreous polymers containing, incorporated in the surface layer, in a depth of between 20 and 300μm, a substance having a refractive index different from that of the vitreous polymer by at least $5.10^{-2}$ units, wherein said articles have a homogeneous refractive index profile and a high surface hardness and are in the form of optical fibres consisting of polymethylmethacrylates which contain, incorporated in the surface layer, in a depth of between 0.00l to 20 μm, a screening consisting of a black dyestuff.

The following examples illustrate this invention.

In the examples all parts and percentages are by weight, unless otherwise specified.

Example 1

A polymethylmethacrylate fibre of 4 mm diameter, having a refractive index of 1.49, was immersed in a bath consisting of a 25% methanol solution of 1,3-difluoro-2-propanol, maintained at a temperature of 60°C.

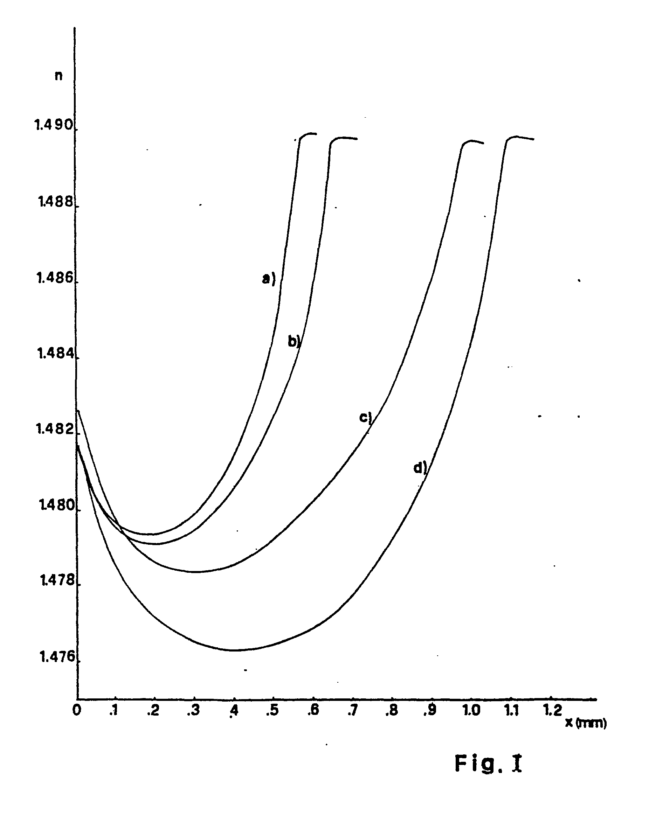

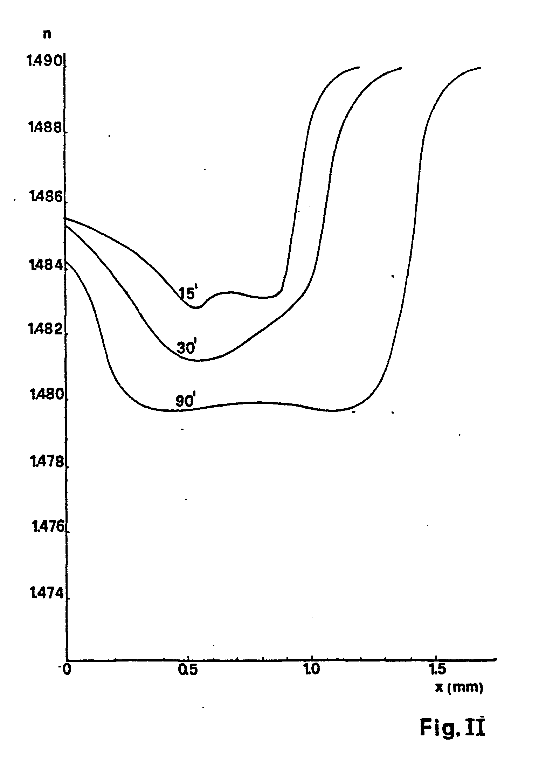

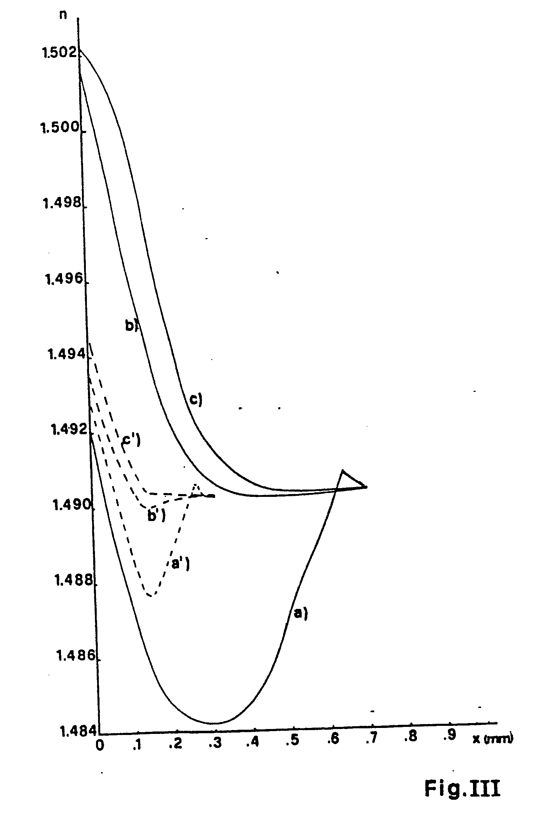

At regular intervals of 15, 30, 60 and 90 minutes, fibre samples a, b, c and d respectively were taken from the bath and washed with water and dried in an oven at 70°C for two days. Interferometric measurements according to the Mac Zender method were carried out on each sample, whereby the refractive index profiles shown in figure 1 were obtained. This figure shows the trend of the refractive index (n) versus the fibre radial distance measured in mm, starting from the outside.

Example 2

Polymethylmethacrylate sheets having a 4 mm thickness were immersed in a bath consisting of a 25% methanol solution of difluoro acetic acid, kept at a temperature of 60°C.

At intervals of 5, 30 and 90 minutes, the sheets were taken from the bath and were washed with water and dried in an oven at 70°C for two hours. Figure II shows the trends of the index of refraction (n) versus the distance (x mm) from the surface of the sheet.

Example 3

2 mm thick polymethylmethacrylate sheets were immersed in a bath consisting of a 20% methanol solution of zinc chloride and maintained at a temperature of 60°C. A sheet was taken from the bath after 15 minutes, another sheet after 60 minutes. These sheets were first washed with methanol and then with water. Figure III shows the trends of the refractive index (n) versus the distance (x mm) from the surface of the sheets. The dotted lines relate to an immersion time of 15 minutes, while the solid lines relate to an immersion time of 60 minutes. The curves indicated with a) and a') correspond to a two-day drying at room temperature; curves b) and b') correspond to a two-day drying at 70°C, and curves c) and c') to a two-day drying at 130°C.

Example 4

A polymethylmethacrylate fibre of 2 mm diameter, having a refractive index of 1.49, was immersed in a bath consisting of a 95% methanol solution of tetraethoxy-silane (having a refractive index of l.38), maintained at a temperature of 90°C. After 20 minutes, the fibre was taken from the bath, washed with water and dried at room temperature.

The obtained fibre showed a penetration depth of the additive of 35 μm; a numerical aperture of O.45, measured by far-field scanning in white light; a spectral attenuation, measured by the insertion method of 2 d B/m at 500 μm; and a pencil hardness of 6H.

Claims

1. A process for manufacturing light-guiding articles prepared from vitreous polymers, which comprises immersing the article into a bath containing a substance having a refractive index different from that of the polymer by at least $5.10^{-2}$ units, dissolved in a solvent thereof having a low boiling point and being capable of swelling the polymer, and subjecting the article so obtained to a heat-treatment at a temperature ranging from 20 to 150°C in order to remove the solvent, wherein the substance having a different refractive index has a boiling temperature higher than 80°C, compatibility with the polymer of the article and stability to light radiation and is selected from fluorinated alcohols, fluorinated acids, fluorinated amines, fluorinated acrylates, esters, anhydrides, inorganic acids and hydroxides, inorganic halides, inorganic nitrates, halogenated alkanes, aromatic hydrocarbons and alkoxysilanes, and wherein the bath temperature ranges from room temperature to 100°C and the immersion time varies from 1 to 200 minutes.

2. The process of the preceding claim, wherein the concentration of the substance having a different refractive index in the bath is up to 100 % by weight.

3. The process of any of the preceding claims, wherein the solvent having a low boiling point is selected from low molecular weight alcohols, esters, ketones, glycols and gasoline.

4. The process of claim 3, wherein the solvent is used in admixture with water.

5. A light-guiding article, consisting of a vitreous polymer containing, incorporated in the surface layer, in a depth of between 20 and 300 µm, a substance having a refractive index different from that of the vitreous polymer by at least $5.10^{-2}$ units, wherein said article has a homogeneous refractive index profile and a high surface hardness and is in the form of an optical fibre consisting of polymethylmethacrylates which contain, incorporated in the surface layer, in a depth of between 0.001 to 20 µm, a screening consisting of a black dyestuff.

6. A light-guiding article according to claim 5, wherein the substance having a different refractive index is selected from fluorinated alcohols, fluorinated acids, fluorinated amines, fluorinated acrylates, esters, anhydrides, inorganic acids and hydroxides, inorganic halides, inorganic nitrates, halogenated alkanes, aromatic hydrocarbons and alkoxysilanes.

**Patentansprüche**

1. Verfahren zur Herstellung lichtleitender, aus glasartigen Polymeren hergestellter Gegenstände, welches umfaßt das Eintauchen des Gegenstandes in ein Bad, enthaltend eine Substanz mit einem Brechungsindex, der von dem des Polymeren um wenigstens $5.10^{-2}$ Einheiten verschieden ist, gelöst in einem Lösungsmittel dafür, das einen niedrigen Siedepunkt aufweist und das Polymere quellen kann, und die Wärmebehandlung des so erhaltenen Gegenstandes bei einer Temperatur im Bereich von 20 bis 150°C, um das Lösungsmittel zu entfernen, bei welchem die Substanz mit einem unterschiedlichen Brechungsindex eine Siedetemperatur von mehr als 80°C, eine Verträglichkeit mit dem Polymeren des Gegenstandes und eine Stabilität gegenüber Lichtstrahlung aufweist und ausgewählt ist aus fluorierten Alkoholen, fluorierten Säuren, fluorierten Aminen, fluorierten Acrylaten, Estern, Anhydriden, anorganischen Säuren und Hydroxiden, anorganischen Halogeniden, anorganischen Nitraten, halogenierten Alkanen, aromatischen Kohlenwasserstoffen und Allkoxysilanen und bei welchem die Badtemperatur im Bereich von Raumtemperatur bis 100°C liegt und die Eintauchzeit von 1 bis 200 Minuten variiert.

2. Verfahren nach dem vorangehenden Anspruch, bei welchem die Konzentration der Substanz mit einem unterschiedlichen Brechungsindex im Bad bis hinauf zu 100 Gew.-% beträgt.

3. Verfahren nach irgendeinem der vorangehenden Ansprüche, bei welchem das Lösungsmittel mit einem niedrigen Siedepunkt ausgewählt ist aus niedrigmolekularen Alkoholen, Estern, Ketonen, Glykolen und Benzin.

4. Verfahren nach Anspruch 3, bei welchem das Lösungsmittel in Mischung mit Wasser verwendet wird.

5. Lichtleitender Gegenstand, bestehend aus einem glasartigen Polymeren, enthaltend, einverleibt in die Oberflächenschicht, in einer Tiefe von zwischen 20 und 300µm, eine Substanz mit einem Brechungsindex, der von dem des glasartigen Polymeren um wenigstens $5.10^{-2}$ Einheiten verschieden ist, in welchem dieser Gegenstand ein homogenes Brechungsindexprofil und eine hohe Oberflächenhärte aufweist und in der Form einer optischen Faser vorliegt, die aus Polymethylmethacrylaten besteht, die einverleibt in die Oberflächenschicht, in einer Tiefe von zwischen 0,001 bis 20 µm, eine aus einem schwarzen Farbstoff bestehende Abschirmung enthalten.

6. Lichtleitender Gegenstand nach Anspruch 5, in welchem die Substanz mit einem unterschiedlichen Brechungsindex ausgewählt ist aus fluorierten Alkoholen, fluorierten Säuren, fluorierten Aminen, fluorierten Acrylaten, Estern, Anhydriden, anorganischen Säuren und Hydroxiden, anorganischen Halogeniden, anorganischen Nitraten, halogenierten Alkanen, aromatischen Kohlenwasserstoffen und Alkoxysilanen.

**Revendications**

1. Un procédé de préparation d'éléments de guidage de la lumière préparés à partir de polymères vitreux qui consiste à immerger l'élément dans un bain contenant une substance dont l'indice de réfraction est différent de celui du polymère de l'élément d'au moins $5.10^{-2}$ unités, cette substance étant dissoute dans un solvant présentant un faible point d'ébullition et capable de faire gonfler le polymère et à soumettre l'élément ainsi obtenu à un traitement à la chaleur à une température comprise entre 20 et 150°C en vue d'éliminer le solvant, procédé dans lequel la substance dont l'indice de réfraction est différent, présente une température d'ébullition supérieure à 80°C, une compatibilité avec le polymère de l'élément et une résistance au rayonnement lumineux et est choisie parmi les alcools fluorés, acides fluorés' amines fluorées, les acrylates fluorés, leurs esters et anhydrides, acides et hydroxydes minéraux, halogénures minéraux, nitrates minéraux, alcanes halogénés, hydrocarbures aromatiques et alkoxysilanes, et dans lequel la température du bain est comprise entre la température ambiante et 100°C et le temps d'immersion varie entre 1 et 200 minutes.

2. Le procédé selon la revendication précédente, dans lequel la concentration de la substance dont l'indice de réfraction est différent dans le bain atteint jusqu'à 100% en poids.

3. Le procédé selon l'une quelconque des revendications précédentes dans lequel le solvant présentant un faible point d'ébullition est choisi parmi les alcools, esters, cétones, glycols et essences de faible poids moléculaire.

4. Le procédé selon la revendication 3, dans lequel le solvant est utilisé en mélange avec de l'eau.

5. Un élément de guidage de la lumière constitué d'un polymère vitreux contenant, incorporé dans sa couche superficielle, à une profondeur comprise entre 20 et 300 µm, une substance dont l'indice de réfraction est différent de celui du polymère vitreux d'au moins 5.10$^{-2}$ unités, dans lequel cet élément présente un profil d'indice de réfraction homogène et une dureté superficielle élevée et se trouve sous la forme d'une fibre optique constituée de polyméthylméthacrylates contenant, incorporés dans leur couche superficielle, à une profondeur comprise entre 0,001 et 20 µm, un écran constitué d'un colorant noir.

6. Un élément de guidage de la lumière selon la revendication 5, dans lequel la substance dont l'indice de réfraction est différent est choisi parmi les alcools fluorés, acides fluorés, amines fluorées, les acrylates fluorés, leurs esters et anhydrides, acides et hydroxydes minéraux, halogénures minéraux, nitrates minéraux, alcanes halogénés, hydrocarbures aromatiques et alkoxysilanes.

Fig. I

Fig. II

Fig.III